# EUROPÄISCHE PATENTANMELDUNG

(11) **EP 3 402 043 A1**
(43) Veröffentlichungstag der Anmeldung: **14.11.2018**
(21) Anmeldenummer: 17170598.1
(22) Anmeldetag: 11.05.2017
(51) Int. Cl.: H02K 1/27, H02K 15/03

(54) **BEFESTIGUNG EINER FADENBANDAGE ZUR FIXIERUNG VON PERMANENTMAGNETEN**

(71) Anmelder: Siemens Aktiengesellschaft, 80333 München (DE)
(72) Erfinder: Volkmuth, Benjamin, 97717 Sulzthal (DE)

(57) **Zusammenfassung**

Die Erfindung betrifft einen Rotor einer elektrischen Maschine. Der Rotor umfasst ein Rotorpaket (1), an dessen Oberfläche wenigstens zwei Permanentmagnete (2) angeordnet sind, die durch wenigstens eine Bandage (7) an der Oberfläche des Rotorpakets (1) fixiert und positioniert sind. Der Rotor weist wenigstens eine Vorrichtung zur Befestigung der Bandage auf. Zudem betrifft die Erfindung ein Verfahren zur Bandagierung eines Rotors einer elektrischen Maschine, der wenigstens eine Vorrichtung zur Befestigung einer Bandage (7) aufweist.

## Beschreibung

Die Erfindung betrifft einen Rotor einer elektrischen Maschine, wobei an der Oberfläche eines Rotorpakets wenigstens zwei Permanentmagnete angeordnet sind, die durch wenigstens eine Bandage an der Oberfläche des Rotorpakets fixiert und positioniert sind. Ferner betrifft die Erfindung ein geeignetes Verfahren zur Bandagierung.

Um Permanentmagnete auf einem Rotor einer elektrischen Maschine zu positionieren und zu fixieren sowie um Fliehkräfte im Betrieb der elektrischen Maschine aufzunehmen, werden Bandagen eingesetzt. Diese Bandagen werden um die auf dem Rotor befindlichen Permanentmagnete gewickelt. Jedoch benötigen die Bandagen einen Bereich, an dem sie an- und abgewickelt werden können, damit während des Bandagierens eine Zugkraft aufgebracht werden kann. Um diese Zugkraft zu erreichen, werden bisher sogenannte Läuferendscheiben eingesetzt, die an den jeweiligen axialen Enden des Rotorpakets zu finden sind. Um diese Läuferendscheiben wird die Bandage mit einigen Umschlingungen an- und auch abgewickelt. Durch die Anwicklung an die Läuferendscheibe kann die Bandage straff um den Rotor gewickelt werden. Jedoch geht dadurch axialer Bauraum verloren, zusätzliche Teile werden benötigt und die elektrische Maschine kann nicht mehr kompakt hergestellt werden.

Aus der DE102007012822A1 ist eine Bandage für Läufer mit Dauermagneten bekannt. Die Bandage besteht aus einer Faserverbundwicklung, die direkt mit Vorspannung auf das Läuferpaket und die Permanentmagnete gewickelt wird. Die Bandage bildet neben den Permanentmagneten Bandagenringe aus, in denen Anfang und Ende gesichert werden.

Der Erfindung liegt die Aufgabe zugrunde, eine Vorrichtung zu schaffen, die das Aufbringen einer Zugkraft auf eine Bandage, die um einen Rotor mit Permanentmagneten gewickelt wird, ermöglicht.

Die Lösung der gestellten Aufgabe gelingt durch einen Rotor einer elektrischen Maschine, wobei an der Oberfläche eines Rotorpakets wenigstens zwei Permanentmagnete angeordnet sind, die durch wenigstens eine Bandage an der Oberfläche des Rotorpakets fixiert und positioniert sind, wobei der Rotor wenigstens eine Vorrichtung zur Befestigung der Bandage aufweist. Zudem wird die Aufgabe gelöst durch ein Verfahren zur Bandagierung eines Rotors einer elektrischen Maschine, der wenigstens eine Vorrichtung zur Befestigung einer Bandage aufweist.

Elektrische Maschinen, deren Rotoren mit Permanentmagneten ausgestattet sind, sind vorzugsweise als permanenterregte Synchronmotoren ausgeführt. Sie werden überwiegend im Bereich kleiner und mittlerer Leistung eingesetzt und kommen vorwiegend für Hilfs- und Fahrzeugantriebe zur Anwendung. Permanenterregte Synchronmotoren weisen eine hohe Leistungsdichte und einen günstigen Wirkungsgrad auf. Zudem sind keine wartungsintensiven Schleifringe erforderlich.

Bei der Fertigung der Rotoren werden in einem bevorzugten Montageverfahren die Permanentmagnete mittels eines Klebstoffes auf einem Rotorpaket angebracht. Das Rotorpaket ist vorzugsweise als Blechpaket ausgeführt und umfasst daher einzelne Bleche, die zu einem Blechpaket zusammengefügt sind. Sind kleinere Permanentmagnete beim Anbringen auf das Rotorpaket bereits magnetisiert, kann anstelle eines Klebstoffes auch alleine diese magnetische Kraft genügen, welche die Permanentmagnete auf dem Rotorpaket hält. Anschließend wird das Rotorpaket, auf welchem die Permanentmagnete angebracht sind, mit einer Bandage, vorzugsweise in Form eines 6 bis 10 mm breiten Bandes, umwickelt. Somit werden die Permanentmagnete fixiert.

Vorteilhaft wird gemäß der Erfindung eine Vorrichtung direkt auf einem Rotor einer elektrischen Maschine zur Befestigung einer Bandage geschaffen. Ein Bauteil in Form einer Läuferendscheibe, die einerseits die Maße der elektrischen Maschine vergrößert und zudem Kosten verursacht, ist nicht nötig.

Da die Vorrichtung auf einem Rotor einer elektrischen Maschine zur Befestigung einer Bandage als Schiene zwischen den Permanentmagneten ausgeführt ist, wird kein axialer Bauraum verschwendet. Vorteilhaft wird die Schiene zwischen den Permanentmagneten als Schiene mit einem T-förmigen Querschnitt, als sogenannte T-Schiene, ausgeführt, um bei einer Umwicklung dieser Schiene mit einer Bandage ein Herausrutschen der Bandage zu vermeiden. Das Rotorpaket umfasst vorzugsweise einzelne Bleche, die zu einem Blechpaket zusammengefügt sind. Die einzelnen Bleche weisen wenigstens eine T-Form auf. Durch das Zusammenfügen der Bleche wird eine durchgängige T-Schiene geschaffen.

Die Schiene wird in Achsrichtung des Rotors auf dem Rotor parallel zu den Permanentmagneten angeordnet und ist vorzugsweise an den jeweiligen axialen Enden des Rotors abgesetzt. Durch diese abgesetzte Ausführung wird verhindert, dass beim Umwickeln der Schiene mit einer Bandage die Umwicklung über das axiale Ende des Rotorpakets hinausragt. Vorteilhaft ist die Schiene in einer zwischen den Permanentmagneten befindlichen Nut versenkt. Aus Symmetriegründen und um einen verbesserten Gleichlauf der elektrischen Maschine zu gewährleisten, befindet sich unabhängig von der Anzahl der Magnete auf dem Rotor vorzugsweise jeweils zwischen genau zwei Permanentmagneten genau eine Nut, in der genau eine versenkte T-Schiene mit abgesetzten Enden angebracht ist.

Die Erfindung ermöglicht den Einsatz einer als Fadenbandage ausgeführten Bandage. Diese Fadenbandage ist vorzugsweise aus Kohlenstofffaser und/oder Glasfaser und/oder Aramidfaser hergestellt. Vorzugsweise weist die Bandage zudem wenigstens einen Kunststoff, insbesondere Duroplast und/oder Thermoplast, auf.

Eine Kombination von Glasfasern und Kunststoff eignet sich für die Fadenbandage besonders gut, da die Zug- und Druckfestigkeit der Glasfaser für eine besondere Aussteifung des Kunststoffes bei gleichzeitiger Erhaltung einer gewissen Flexibilität sorgt. Durch diese Kombination wird eine sehr feste, aber dennoch leichte Fadenbandage geschaffen.

Auch eine Fadenbandage, in welcher Kohlenstofffasern und Kunststoff kombiniert sind, erreicht hohe Festigkeiten und Steifigkeiten bei gleichzeitig geringer Bruchdehnung.

Eine Fadenbandage, die Aramidfasern beinhaltet, zeichnet sich besonders durch Zugfestigkeit und Hitzeresistenz aus.

Eine Fadenbandage weist zudem einen Kunststoff auf. Hierbei kommen insbesondere Duroplaste oder Thermoplaste zum Einsatz. Während Duroplaste nach ihrer Aushärtung durch vorzugsweise Erwärmung nicht mehr verformt werden können, können Thermoplaste innerhalb eines bestimmten Temperaturbereichs beliebig oft verformt werden.

Zu Beginn des Wickelvorgangs wird die Bandage vorzugsweise 1,5 bis 4 Mal um die T-Schiene gewickelt. Anschließend wird die Fadenbandage bevorzugt in einem Strang in Umfangsrichtung um den Rotor gewickelt.

Die Bandage wird von einem vorderen axialen Ende des Rotors in Umfangsrichtung bis zu einem hinteren axialen Ende des Rotors gewickelt. An dieser Stelle besteht die Möglichkeit, die Bandage zu befestigen. Die Fadenbandage wird hierbei erneut mit einem vorzugsweise schmalen Gegenstand, insbesondere in Form einer Nadel, um die T-Schiene gewickelt und/oder mittels eines Klebstoffes am hinteren axialen Ende befestigt oder mittels Löten fixiert.

Jedoch ist auch eine erneute Umwicklung des Rotors in gegensätzlicher Richtung möglich, sodass die Fadenbandage in zwei Schichten um den Rotor gewickelt ist. Am vorderen axialen Ende des Rotorpakets angekommen kommt vorzugsweise eine der drei bereits erläuterten Befestigungsmaßnahmen zum Einsatz. Der Motor kann jedoch auch erneut von der Fadenbandage umwickelt werden, sodass sich eine drei- oder nach weiteren Wickelvorgängen mehrschichtige Umwicklung ergibt.

Während des Wickelvorgangs oder auch danach wird die Fadenbandage verfestigt. Um eine Verfestigung während des Wickelvorgangs zu erreichen, wird die Fadenbandage beim Umwickeln durch ein Bad geführt, welches wenigstens einen Kunststoff enthält. Anschließend wird vorzugsweise durch die Energie elektromagnetischer Wellen, insbesondere in Form von Laserstrahlung oder Ultraviolettstrahlung, oder durch thermische Energie, insbesondere durch den Einsatz eines Gasbrenners, die getränkte Fadenbandage ausgehärtet.

Es besteht auch die Möglichkeit, eine Fadenbandage zu wählen, die bereits einen Kunststoff enthält und daher beim Wickeln nicht mehr durch ein Bad geführt werden muss. Auch hierbei wird vorzugsweise die Energie elektromagnetischer Wellen, insbesondere in Form von Laserstrahlung oder Ultraviolettstrahlung, oder thermische Energie, insbesondere durch den Einsatz eines Gasbrenners, zur Verfestigung genutzt.

Zudem besteht die Möglichkeit, die Fadenbandage erst nach dem Wickelvorgang zu härten. Vorzugsweise wird hierbei der in der Bandage befindliche Kunststoff verfestigt, indem die Fadenbandage in einem Ofen gebacken wird. Die Bandage kann hierfür während des Wickelvorgangs durch ein Bad, welches wenigstens einen Kunststoff enthält, geführt werden oder bereits wenigstens einen Kunststoff enthalten.

Vorteilhaft werden einige Rotorpakete gefertigt und anschlie-βend bandagiert. Diese fertigen Rotormodule werden gelagert und im Bedarfsfall besteht die Möglichkeit, die bereits bandagierten Rotormodule zu einem Rotor zusammenzufügen.

Im Folgenden wird die Erfindung anhand der in den Figuren dargestellten Ausführungsbeispiele näher beschrieben und erläutert. Es zeigen:
- FIG 1: eine Ausgestaltung eines Rotors, der über eine T-Schiene verfügt, die in einer Nut versenkt ist,
- FIG 2: einen Ausschnitt der Ausgestaltung aus FIG 1,
- FIG 3: eine Seitenansicht des Ausschnitts aus FIG 2,
- FIG 4: eine Ausgestaltung der mit einer Fadenbandage umwickelten Schiene,
- FIG 5: den Ablauf eines Verfahrens zur Bandagierung eines Rotors.

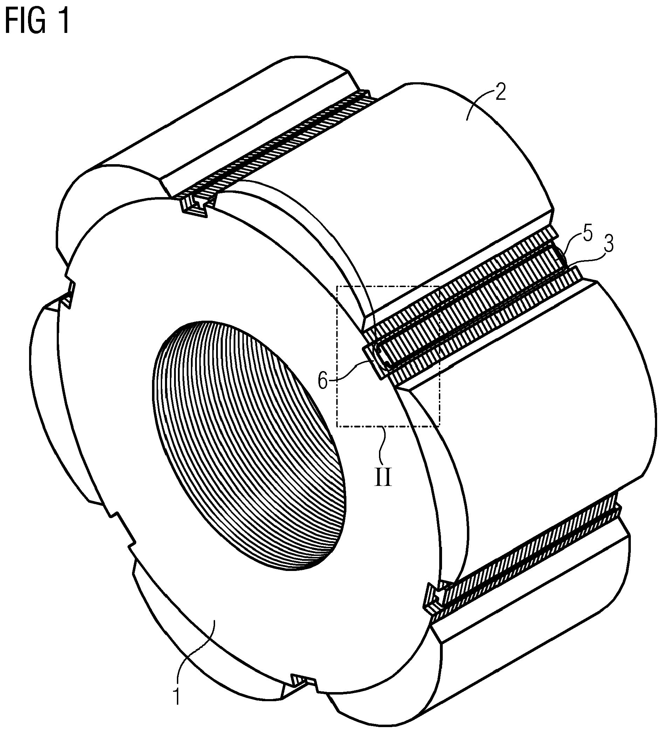

FIG 1 zeigt eine Ausgestaltung eines erfindungsgemäßen Rotors. Der Rotor weist ein Rotorpaket 1 auf, das mit Permanentmagneten 2 besetzt ist. In einer bevorzugten Ausführung befinden sich auf der Rotoroberfläche genau sechs Permanentmagnete 2. Jeweils zwischen den Permanentmagneten 2 befindet sich eine Nut 3. In dieser Nut 3 befindet sich eine T-Schiene 5. Diese T-Schiene 5 reicht nicht vom vorderen axialen Ende des Rotors bis zum hinteren axialen Ende des Rotors, sondern besitzt einen abgesetzten Bereich 6 an den jeweiligen axialen Enden. Die T-Schiene 5 dient als Ankerpunkt einer vorzugsweise als Fadenbandage ausgeführten Bandage. Die T-Schiene wird vorzugsweise 1,5 bis 4 Mal umschlungen, um eine Zugkraft auf die Fadenbandage zu erreichen. Anschließend wird die Fadenbandage um den Rotor gewickelt. Aus Gründen der Symmetrie wird zwischen jeweils zwei Permanentmagneten 2 rund um den Rotor eine in einer Nut 3 versenkte T-Schiene 5 angebracht. Jedoch wird vorzugsweise nur eine T-Schiene als Ankerpunkt der Fadenbandage genutzt. Die in FIG 1 dargestellte Ausführung eines Rotors kann auch ein Rotormodul sein, das zusammen mit anderen Rotormodulen vorzugsweise gleicher Bauart zu einem Rotor zusammengefügt wird.

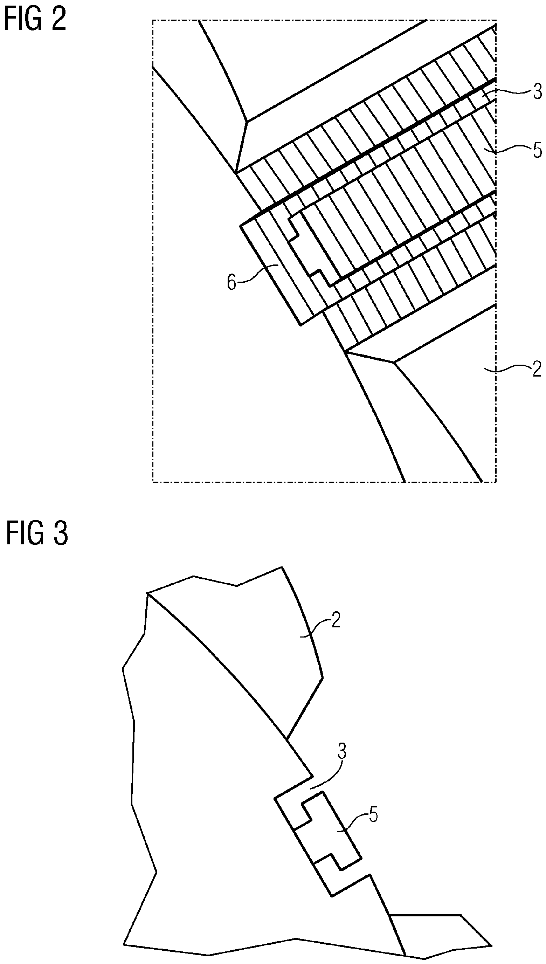

FIG 2 zeigt einen Ausschnitt aus dem in FIG 1 dargestellten Rotor. Hierbei wird besonders der abgesetzte Bereich 6 der T-Schiene 5 deutlich, wobei die T-Schiene 5 in einer Nut 3 zwischen den Permanentmagneten versenkt ist. Der abgesetzte Bereich ist von Vorteil, da beim Umwickeln der T-Schiene mit einer Fadenbandage der abgesetzte Bereich durch die Fadenbandage belegt wird und somit die Fadenbandage nicht über das axiale Ende des Rotors hinausragt.

FIG 3 zeigt eine Seitenansicht des Ausschnittes, der in FIG 2 dargestellt ist. Man sieht hier deutlich die T-förmige Schiene 5, die in der Nut 3 zwischen den Permanentmagneten 2 versenkt ist. Aus Symmetriegründen befindet sich jeweils zwischen zwei benachbarten Permanentmagneten 2 eine T-Schiene 5, die in einer Nut 3 versenkt ist. Somit wird ein Gleichlauf der elektrischen Maschine gewährleistet. Beim Umwickeln des Rotors wird jedoch nur eine T-Schiene als ein Ankerpunkt der Fadenbandage verwendet.

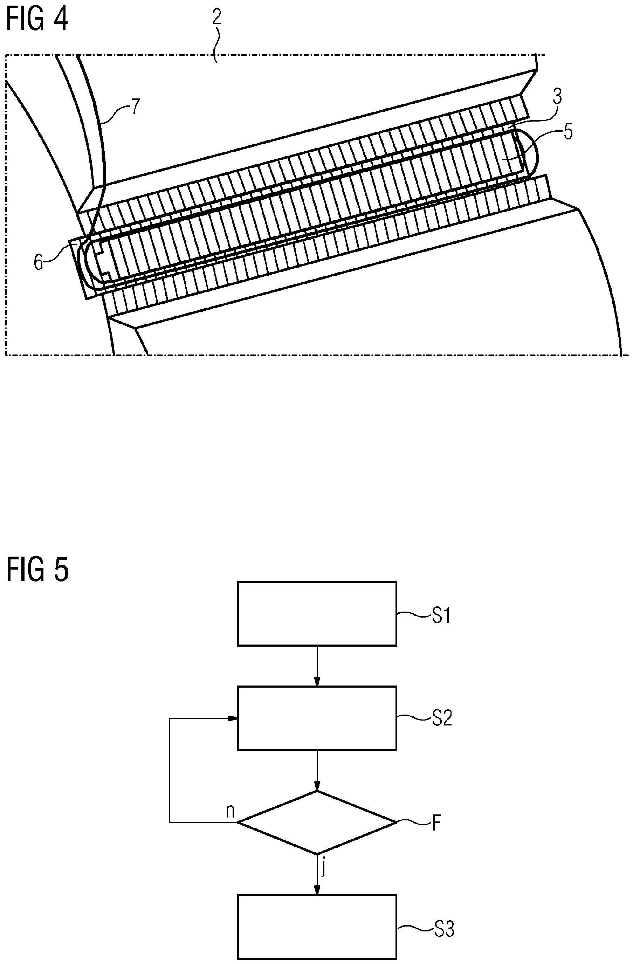

FIG 4 zeigt wieder einen Ausschnitt aus dem Rotor gemäß FIG 1. Hierbei sieht man die von einer Fadenbandage 7 umschlungene T-Schiene 5. Vorzugsweise wird die T-Schiene 5 1,5 bis 4 Mal von der Fadenbandage 7 zu Anfang des Wickelvorgangs umschlungen. Die hierdurch aufgebrachte Zugkraft ermöglicht eine straffe Umwicklung des Rotors in Umfangsrichtung.

FIG 5 zeigt den Ablauf eines Verfahrens zur Bandagierung eines Rotors. Mit einer Fadenbandage 7 (vgl. FIG 4) wird in einem Verfahrensschritt S1 die T-Schiene 5 vorzugsweise 1,5 bis 4 Mal umwickelt. Da dadurch Zugkraft aufgebracht wird, wird in einem Verfahrensschritt S2 der Rotor in Umfangsrichtung von einem vorderen axialen Ende hin zu einem hinteren axialen Ende umwickelt. Es besteht die Möglichkeit, die Wicklung mehrschichtig auszuführen. Hierzu kann der Rotor, wenn in einer Statusabfrage F gewünscht, in der Figur durch n gekennzeichnet, erneut vom hinteren axialen Ende bis hin zum vorderen axialen Ende mit der Fadenbandage 7 umwickelt werden. Dieser Vorgang S2 kann so lange wiederholt werden, bis die Wicklungen gemäß der Vorgabe F fertiggestellt wurden. Ist der Rotor gemäß Vorgabe umwickelt, in der Figur durch j gekennzeichnet, kann die Fadenbandage in einem Verfahrensschritt S3 festgemacht werden. Hierbei gibt es verschiedene Möglichkeiten. Vorzugsweise wird die Fadenbandage 7 mittels eines Klebstoffes oder mittels Löten am Rotor befestigt. Jedoch ist es auch möglich, die Fadenbandage erneut um die T-Schiene 5 zu wickeln und durch diese Wicklung zu befestigen. Die Fadenbandage 7 ist durch das Bandagierungsverfahren über die Permanentmagnete 2 gespannt. Somit ergibt sich ein Raum, der die T-Schiene 5 umgibt. Mittels eines schmalen, langen Gegenstandes, insbesondere einer Nadel, kann die Fadenbandage 7 erneut vorzugsweise 1,5 bis 4 Mal um die T-Schiene gewickelt und so befestigt werden.

## Patentansprüche

1. Rotor einer elektrischen Maschine, wobei an der Oberfläche eines Rotorpakets (1) wenigstens zwei Permanentmagnete (2) angeordnet sind, die durch wenigstens eine Bandage an der Oberfläche des Rotorpakets (1) fixiert und positioniert sind, **dadurch gekennzeichnet, dass** der Rotor wenigstens eine Vorrichtung zur Befestigung der Bandage aufweist.

2. Rotor einer elektrischen Maschine nach Anspruch 9, wobei die Vorrichtung zur Befestigung als Schiene (5) zwischen den Permanentmagneten (2) ausgeführt ist.

3. Rotor einer elektrischen Maschine nach einem der Ansprüche 1 oder 2, wobei die Schiene als T-Schiene (5) ausgeführt ist.

4. Rotor einer elektrischen Maschine nach einem der Ansprüche 1 bis 3, wobei die Schiene (5) parallel zu den Permanentmagneten (2) angeordnet ist.

5. Rotor einer elektrischen Maschine nach einem der Ansprüche 1 bis 4, wobei die Schiene (5) an den jeweiligen axialen Enden des Rotors abgesetzt (6) ausgeführt ist.

6. Rotor einer elektrischen Maschine nach einem der Ansprüche 1 bis 5, wobei die Schiene (5) in einer zwischen den Permanentmagneten (2) befindlichen Nut (3) versenkt ist.

7. Rotor einer elektrischen Maschine nach einem der Ansprüche 1 bis 6, wobei rund um das Rotorpaket (1) jeweils zwischen zwei Permanentmagneten (2) eine in einer Nut (3) versenkte Schiene (5) angeordnet ist.

8. Rotor einer elektrischen Maschine nach Anspruch 1, wobei die Bandage als Fadenbandage (7) ausgeführt ist.

9. Rotor einer elektrischen Maschine nach einem der Ansprüche 1 oder 8, wobei die Bandage (7) aus Kohlenstofffaser und/oder Glasfaser und/oder Aramidfaser hergestellt ist.

10. Rotor einer elektrischen Maschine nach einem der Ansprüche 1, 8 oder 9, wobei die Bandage (7) wenigstens einen Kunststoff, vorzugsweise Duroplast und/oder Thermoplast, beinhaltet.

11. Rotor einer elektrischen Maschine nach einem der Ansprüche 1 bis 10, wobei die Schiene (5) von der Fadenbandage (7) mit vorzugsweise 1,5 bis 4 Umschlingungen umwickelt ist.

12. Rotor einer elektrischen Maschine nach einem der Ansprüche 1 bis 11, wobei nur eine Schiene (5) von der Fadenbandage (7) umwickelt ist.

13. Rotor einer elektrischen Maschine nach einem der Ansprüche 1 bis 11, wobei der Rotor von der Fadenbandage (7), vorzugsweise in einem Strang, umwickelt ist.

14. Verfahren zur Bandagierung eines Rotors einer elektrischen Maschine nach einem der Ansprüche 1 bis 13, der wenigstens eine Vorrichtung zur Befestigung einer Bandage (7) aufweist, wobei um die Vorrichtung eine Bandage (7) gewickelt wird.

15. Verfahren nach Anspruch 14, wobei die Fadenbandage (7) vorzugsweise 1,5- bis 4-mal um die T-Schiene (5) gewickelt wird.

16. Verfahren nach einem der Ansprüche 14 oder 15, wobei die Fadenbandage (7) in einem Strang in Umfangsrichtung um den Rotor gewickelt wird.

17. Verfahren nach einem der Ansprüche 14 bis 16, wobei die Fadenbandage (7) von einem vorderen axialen Ende des Rotors in Umfangsrichtung bis zu einem hinteren axialen Ende des Rotors gewickelt wird.

18. Verfahren nach einem der Ansprüche 14 bis 17, wobei die Fadenbandage (7) nach vorzugsweise vollständiger Umwicklung des Rotors mittels Kleben und/oder Löten und/oder Umwicklung der T-Schiene (5) fixiert wird.

19. Verfahren nach einem der Ansprüche 14 bis 18, wobei die Fadenbandage (7) mehrmals um den Rotor gewickelt wird.

20. Verfahren nach einem der Ansprüche 14 bis 19, wobei die Fadenbandage (7) während des Wickelns verfestigt wird.

21. Verfahren nach einem der Ansprüche 14 bis 20, wobei die Fadenbandage (7) nach dem Wickeln verfestigt wird.
